# EUROPÄISCHE PATENTANMELDUNG

(11) **EP 1 447 829 A1**
(43) Veröffentlichungstag der Anmeldung: **18.08.2004**
(21) Anmeldenummer: 03003447.4
(22) Anmeldetag: 14.02.2003
(51) Int. Cl.: H01H 11/00

(54) **Installationsgerät und Installationsbaugruppe mit Installationsgerät**

(71) Anmelder: SIEMENS AKTIENGESELLSCHAFT, 80333 München (DE)
(72) Erfinder: Brandl, Wolfgang, 92224 Amberg (DE); Busch, Klaus, 92224 Amberg (DE); Steger, Reinhard, 92237 Sulzbach-Rosenberg (DE)

(57) **Zusammenfassung**

Um ein Installationsgerät (1a,1b) und eine Installationsbaugruppe (2a-2j) mit zumindest einem Installationsgerät (1a,1b) anzugeben, die einerseits für einen Einsatz verschiedener Anschlusstechnologien und andererseits für eine Einbindung in verschiedenen Verdrahtungssystemen geeignet sind, ist vorgesehen, dass das Installationsgerät (1a,1b) an einer Anschlussseite (3a-3c) mit einem Kontaktmittel (4a,4b) versehen ist, welches sowohl zu einem Gegenkontaktmittel (5a,5b) einer an der Anschlussseite (3a-3c) anordbaren Anschlussvorrichtung (6a,6b) als auch zu einem weiteren Gegenkontaktmittel (7a,7b) einer an der Anschlussseite (3a-3c) anordbaren, jedoch zu der Anschlussvorrichtung (6a,6b) unterschiedlichen, weiteren Anschlussvorrichtung (8a,8b) kompatibel ist.

## Beschreibung

Die Erfindung bezieht sich auf ein Installationsgerät und eine Installationsbaugruppe mit zumindest einem Installationsgerät gemäß Patentanspruch 1 bzw. 15.

Aus der WO 99/23737 ist ein modular aufgebauter Verbraucherabzweig bekannt, der aus einer Abzweig-Baugruppe und einem Basis-Unterteil mit integrierten Leitungs- und/oder Bus-Abschnitten zusammengesetzt ist. Das Basis-Unterteil ist hierbei zu einem modularen Trägersystem mit einem Leitungs- und Bussystem durch Anreihung und Kontaktierung weiterer baugleicher Basis-Unterteile zur Aufnahme von weiteren Abzweig-Baugruppen oder Ein- bzw. Ausgabe-Baugruppen erweiterbar.

Es ist die Aufgabe der vorliegenden Erfindung, ein Installationsgerät und eine Installationsbaugruppe mit zumindest einem Installationsgerät anzugeben, die einerseits für einen Einsatz verschiedener Anschlusstechnologien und andererseits für eine Einbindung in verschiedenen Verdrahtungssystemen geeignet sind.

Diese Aufgabe wird hinsichtlich des Installationsgeräts erfindungsgemäß durch die Merkmale des Patentanspruchs 1 und hinsichtlich der Installationsbaugruppe erfindungsgemäß durch die Merkmale des Patentanspruchs 15 gelöst; vorteilhafte Ausgestaltungen des Installationsgeräts bzw. der Installationsbaugruppe sind jeweils Gegenstand von weiteren Ansprüchen.

Durch die Ausführung des Installationsgeräts mit zumindest einem an einer geräteeigenen Anschlussseite angeordneten Kontaktmittel, das sowohl zu einem Gegenkontaktmittel einer an der Anschlussseite anordbaren Anschlussvorrichtung als auch zu einem Gegenkontaktmittel einer an der Anschlussseite anordbaren, jedoch zu der Anschlussvorrichtung unterschiedlichen, weiteren Anschlussvorrichtung kompatibel ist, wird mittels der für die jeweiligen Gegenkontaktmittel zusammenpassend ausgeführten Kontaktmittel erreicht, dass direkt an dem Installationsgerät wahlweise zum einen Anschlussvorrichtungen mit verschiedenen Anschlusstechnologien für daran anschließbare Leiter bzw. zum anderen verschiedene Verdrahtungssysteme mit Hauptstrom- und/oder Hilfsstrom-Leiterbahnen adapterfrei mit einfachen Mitteln elektrisch und mechanisch ankoppelbar sind.

Hinsichtlich der Installationsbaugruppe mit zumindest einem an verschiedenen Anschlussseiten jeweils ein Kontaktmittel aufweisendes Installationsgerät mit daran anordbaren, jedoch zueinander unterschiedlichen Anschlussvorrichtungen mit einem zu dem entsprechenden Kontaktmittel kompatibel ausgeführten Gegenkontaktmittel, das zu dem Kontaktmittel einheitlich bzw. miteinander derart vereinbar ausgebildet ist, dass je Anschlussseite eine Schnittstelle geschaffen, die eine Baugruppenintegration der optional an dem Installationsgerät anordund kontaktierbaren, insbesondere ungleichen, Anschlussvorrichtungen mit verschiedenen Anschlusstechnologien für Stromleitungen bzw. verschiedene Verdrahtungssysteme mit Hauptstrom- und/oder Hilfsstrom-Leiterbahnen adapterfrei gewährleistet.

Mit Vorteil ist an einer Anschlussseite des Installationsgeräts zumindest ein drittes Kontaktmittel integriert, welches zu einem dritten Gegenkontaktmittel einer an der einen Anschlussseite anordbaren dritten Anschlussvorrichtung kompatibel ist. Auch die dritte Anschlussvorrichtung, insbesondere als Melde- und/oder Steuermodul, ist hierbei adapterfrei, also unmittelbar an dem Installationsgerät bzw. an der Installationsbaugruppe anbau- und kontaktierbar, so dass je nach Anwendungsfall die gewünschte Anschlussvorrichtung mit der entsprechenden Anschlusstechnologie vorgesehen werden kann.

Die Erfindung sowie vorteilhafte Ausgestaltungen gemäß Merkmalen der weiteren Ansprüche werden im Folgenden anhand in der Zeichnung dargestellter Ausführungsbeispiele näher erläutert; darin zeigen:
- FIG 1 und 2: jeweils schematisch dargestellt ein Installationsgerät als Teil einer Installationsbaugruppe in verschiedenen Ausführungsvarianten;
- FIG 3 und 4: jeweils schematisch dargestellt eine Installationsbaugruppe im Sinne eines Installationssystems in verschiedenen Ausführungsvarianten;
- FIG 5 bis 19: perspektivisch dargestellte Ausgestaltungen zweier Installationsgeräte als Teil einer Installationsbaugruppe;
- FIG 20 und 21: schematisch bzw. perspektivisch dargestellte Kontaktelemente und Gegenkontaktelemente.

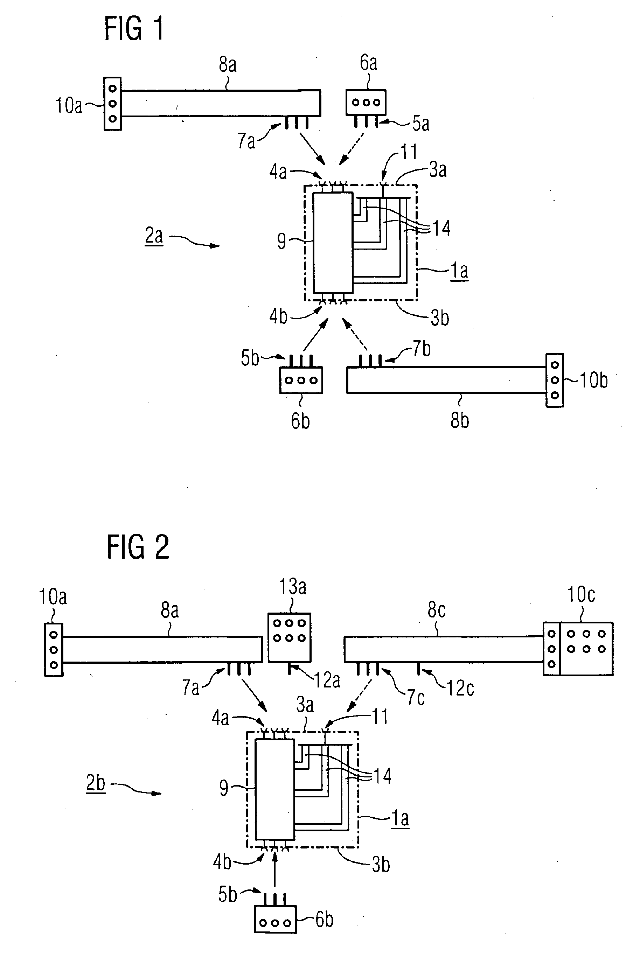

In FIG 1 ist ein elektrisches Installationsgerät 1a als Teil einer Installationsbaugruppe 2a gezeigt, das an einer Anschlussseite 3a mit einem Kontaktmittel 4a versehen ist. Das Kontaktmittel 4a ist hierbei zu einem Gegenkontaktmittel 5a einer an der Anschlussseite 3a anordbaren Anschlussvorrichtung 6a kompatibel, also zusammenpassend ausgeführt. Ebenso kompatibel ist das Kontaktmittel 4a zu einem weiteren Gegenkontaktmittel 7a einer an der Anschlussseite 3a anordbaren, jedoch zu der Anschlussvorrichtung 6a unterschiedlichen, weiteren Anschlussvorrichtung 8a. Hierbei ist der Einsatz verschiedener Anschluss- und/oder Verdrahtungssysteme mit einfachen Mitteln gewährleistet.

In einer vorteilhaften Ausgestaltung ist das Installationsgerät 1a an einer weiteren Anschlussseite 3b mit einem weiteren Kontaktmittel 4b versehen, das ebenfalls mit einem Gegenkontaktmittel 5b einer Anschlussvorrichtung 6b und mit einem weiteren Gegenkontaktmittel 7b einer weiteren, jedoch zu der Anschlussvorrichtung 6b unterschiedlich ausgebildeten, weiteren Anschlussvorrichtung 8b kompatibel ist. Die kontaktierbaren Anschlussvorrichtungen 6a,6b bzw. 8a,8b sind an den Anschlussseiten 3a,3b jeweils für sich auch mechanisch befestigbar.

Der modulare Aufbau der Installationsbaugruppe 2a ergibt sich durch eine Trennung der als Anschlusseinheit, insbesondere als Kontaktmodul, ausgeführten Anschlussvorrichtung 6a,6b bzw. der weiteren Anschlussvorrichtung 8a,8b - ausführbar als Kontaktschienen- bzw. Sammelsystem - von dem zumindest eine elektrische Funktionseinheit 9 aufweisenden Installationsgerät 1a. Eine die Kompatibilität der Anschlussvorrichtungen 6a,6b bzw. 8a,8b und der Funktionseinheit 9 gewährleistende Schnittstelle mit einer einheitlichen und gegenseitig ergänzenden Bauweise der Kontaktmittel 4a,4b und der Gegenkontaktmittel 5a,5b bzw. 7a,7b gewährleistet eine direkte Kontaktierung der Funktionseinheit 9 des Installationsgeräts 1a mit den austausch- und abnehmbaren Kontaktmodulen wie auch mit dem Kontakt- bzw. Sammelschienensystem für einen Haupt- und/oder Hilfsstromkreis. Im Rahmen der Erfindung können der Haupt- und/oder der Hilfsstromkreis neben aktiven Leitern, wie z.B. Außen-, Steuer- und/oder Neutralleiter, auch inaktive Leiter, also z.B. einen Schutzleiter, umfassen.

Die als Kontaktmodule vorgesehenen Anschlussvorrichtungen 6a,6b sind für daran abgangsseitig anzuschließende Geräteleitungen zur Versorgung eines Lastelements ausgelegt. Hingegen dienen die weiteren Anschlussvorrichtungen 8a,8b als Sammelschienensystem für den Hauptstromkreis und versorgen als solche das Installationsgerät 1a bzw. die Installationsbaugruppe 2a mit Hauptstrom über eine entsprechende Hauptstromeinspeisung 10a,10b. Das Installationsgerät 1a verfügt darüber hinaus vorteilhafterweise über zumindest ein an der Anschlussseite 3a angeordnetes drittes Kontaktmittel 11, welches zu einem dritten Gegenkontaktmittel 12a einer an der Anschlussseite 3a anordbaren dritten Anschlussvorrichtung 13a, wie zu FIG 2 nachfolgend beschrieben, kompatibel ist.

Das Installationsgerät 1a der Installationsbaugruppe 2a ist, auch in der Form eines Reiheneinbaugeräts, u.a. als Schaltgerät, insbesondere als Abzweigschaltgerät für einen Verbraucherabzweig, ausführbar. Das Abzweigschaltgerät kann hierbei verschiedene Funktionseinheiten in Kombination, wie beispielsweise einen Schütz, ein Überlastrelais und/oder einen Leistungsschalter, umfassen. Neben der Variante als Abzweigschaltgerät, z.B. für eine Maschine oder Anlage, ist eine Ausführung des Installationsgeräts 1a als Motor- oder Sanftstarter vorsehbar, wobei sich der Motorstarter durch die Funktionen Schalten und Schützen auszeichnet; der Sanftstarter bietet zudem ein kontaktloses Lastschalten mittels zumindest einem elektronisch angesteuerten Leistungs-Halbleiterelement. Ebenso ist ein Motorschutzschalter mit den Funktionen Kurzschluss- und/oder Überlastschutz sowie ein Thermistorauswertegerät für die letztgenannte Schutzfunktion vorsehbar. Das Installationsgerät 1a bzw. die Installationsbaugruppe 2a sind ferner mit Modulen zum Steuern und/oder Regeln sowie zum Senden und Empfangen wie auch zum Erfassen und/oder Verarbeiten von Daten bzw. Signalen ausrüstbar.

In FIG 2 ist die Installationsbaugruppe 2b, die das Installationsgerät 1a umfasst, in einer vorteilhaften Ausgestaltung gezeigt. Das Installationsgerät 1a respektive die Funktionseinheit 9 ist hierbei an der Anschlussseite 3a neben dem Kontaktmittel 4a auch mit dem dritten Kontaktmittel 11 ausgestattet. Das Kontaktmittel 4a korrespondiert mit dem weiteren Gegenkontaktmittel 7a der weiteren Anschlussvorrichtung 8a, während das dritte Kontaktmittel 11 mit dem dritten Gegenkontaktmittel 12a der an der Anschlussseite 3a anordbaren dritten Anschlussvorrichtung 13a in gegenseitiger Ergänzung zusammenfügbar ausgestaltet ist. Das dritte Kontaktmittel 11 wie auch das dritte Gegenkontaktmittel 12c sind hierbei vereinfacht dargestellt und selbstverständlich für einen Anschluss mit mehreren Hilfsleitungen 14 gemäß FIG 1 und 2 ausführbar. Die Hilfsleitungen 14 sind ausgehend von der Funktionseinheit 9 jeweils auf das dritte Kontaktmittel 11 in einer mehrbahnigen Ausgestaltung geführt.

An Stelle der separat ausgeführten weiteren Anschlussvorrichtung 8a und der dritten Anschlussvorrichtung 13a ist eine kombinierte Anschlussvorrichtung 8c mittels dem zugehörigen weiteren Gegenkontaktmittel 7c und dem dritten Gegenkontaktmittel 12c mechanisch und elektrisch mit dem Installationsgerät 1a verbindbar. Die als Zusatzmodul ausgeführte dritte Anschlussvorrichtung 13a, die als Anschlusseinheit in der kombinierten Anschlussvorrichtung 8c integriert ist, dient ggf. als Steuer- und/oder Meldemodul und ist mit dem Hilfsstromkreis bzw. mit einem Hilfsenergiebus elektrisch leitend verbindbar. Eine geeignete Haupt- und Hilfsstromeinspeisung 10c ist, entsprechend der Hauptstromeinspeisung 10a der weiteren Anschlussvorrichtung 8a, an der kombinierten Anschlussvorrichtung 8c vorgesehen. An der der Anschlussseite 3a gegenüberliegenden weiteren Anschlussseite 3b des Installationsgerät 1a, ist die Anschlussvorrichtung 6b mittels dem Gegenkontaktmittel 5b an dem Kontaktmittel 4b des Installationsgeräts 1a gemäß dem Ausführungsbeispiel nach FIG 1 ebenfalls anordbar.

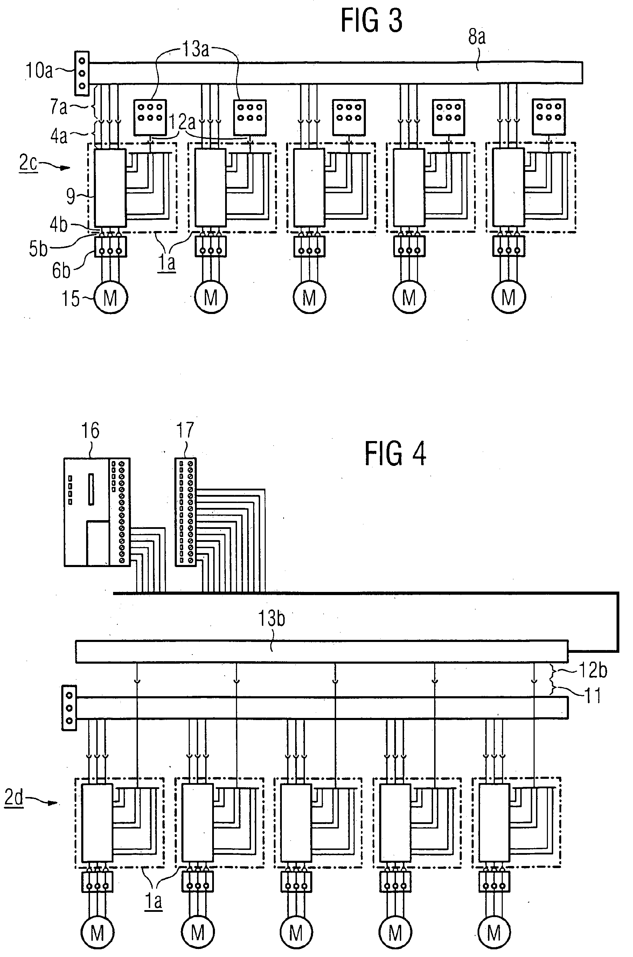

In FIG 3 ist die Installationsbaugruppe 2c im Sinne eines Installationssystems in einer vorteilhaften Ausführungsvariante gezeigt. Die weitere Anschlussvorrichtung 8a ist derart ausgeführt, dass mittels deren Gegenkontaktmittel 7a beispielsweise mehrere nebeneinander angeordnete Einheiten des Installationsgeräts 1a an den zugehörigen Kontaktmitteln 4a anschließbar sind und somit eine gemeinsame Stromversorgung über die Hauptstromeinspeisung 10a gegeben ist. Die Anschlussvorrichtung 6b ist hierbei über ihre Gegenkontaktmittel 5b an den Kontaktmitteln 4b gemäß FIG 1 bzw. 2 Leiter für Leiter angeschlossen. An einer Abgangsseite der Anschlussvorrichtung 6b ist ein Lastelement, insbesondere ein Drehstrommotor 15, über entsprechende Leitungen - Phasen und ggf. Schutzleiter - mit dem Installationsgerät 1a verbunden. Die Funktionseinheit 9 des Installationsgeräts 1a ist hierbei, wie vereinfacht dargestellt, zum Schalten zumindest einer Phase vorgesehen, wobei die dritte Anschlussvorrichtung 13a je Installationsgerät 1a gemäß FIG 1 und 2 ausgeführt ist. Gleiches gilt für die benachbarten Einheiten des Installationsgeräts 1a und der jeweiligen Anschlussvorrichtung 13a.

Die in FIG 4 gezeigte Ausführungsvariante der ebenfalls im Sinne eines Installationssystems ausgeführten Installationsbaugruppe 2d weist im Gegensatz zu der Installationsbaugruppe 2c an Stelle der für jedes einzelne Installationsgerät 1a vorgesehenen Anschlussvorrichtung 13a gemäß FIG 3 eine durchgehende und mehrere Einheiten des Installationsgeräts 1a versorgende, dritte Anschlussvorrichtung 13b mit entsprechend ausgelegtem dritten Gegenkontaktmittel 12b passend für das jeweilige dritte Kontaktmittel 11 auf. Die dritte Anschlussvorrichtung 13b ist vorteilhafterweise mit einer Steuerung 16, insbesondere mit einer speicherprogrammierbaren Steuerung (SPS), und mit einer digitalen Ein-/Ausgabe-Baugruppe 17 elektrisch und ggf. mechanisch verbunden, so dass mit einfachen Mitteln auch eine übergeordnete Steuereinheit zum Signalaustausch zwischen den einzelnen Installationsgeräten 1a in dem Installationssystem anordbar ist.

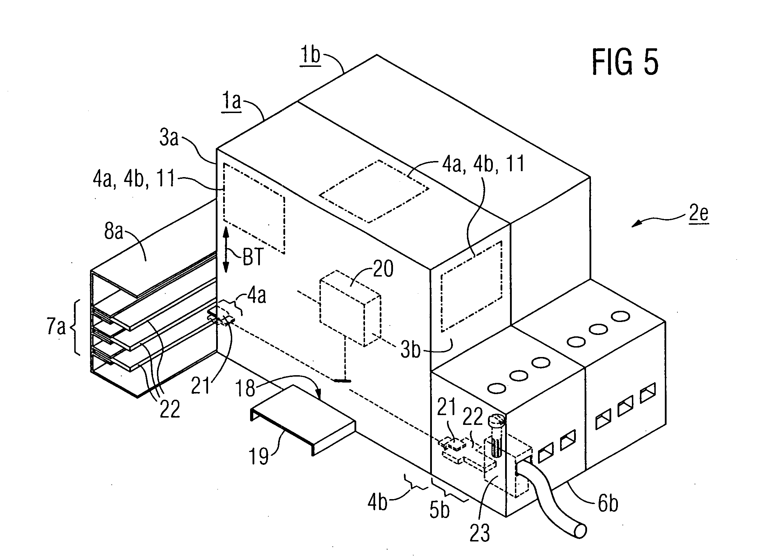

In FIG 5 sind zwei nebeneinander angeordnete Installationsgeräte 1a, 1b als Teil einer Installationsbaugruppe 2e perspektivisch in einer vorteilhaften Ausgestaltung dargestellt. Die Installationsgeräte 1a, 1b sind hierbei als Reiheneinbaugeräte ausgeführt und durch ein Aufnahmemittel 18 auf einer Tragschiene 19 befestigt bzw. aufgeschnappt. Das Aufnahmemittel 18 für die Tragschiene 19 - auch als Halteschiene, Profilschiene bzw. Hutschiene bezeichnet - ist entsprechend den gängigen Aufnahmevorrichtungen ausführbar. Das Installationsgerät 1a in einer dreiphasigen Ausbildung weist - vereinfacht für eine Phase bzw. Leiterbahn dargestellt - an der Anschlussseite 3a das Kontaktmittel 4a und an der weiteren Anschlussseite 3b das weitere Kontaktmittel 4b auf. Durch den so zusammengestellten Geräteaufbau der Installationsbaugruppe 2e ist im montierten Zustand eine unveränderte Baugruppentiefe BT erreichbar.

Die Kontaktmittel 4a,4b sind vorteilhafterweise phaseneinheitlich, das heißt baugleich je Leiterbahn ausgebildet, so dass mit gleichen bzw. einheitlichen und somit kostengünstigen Bauteilen das Installationsgerät 1a aufgebaut werden kann. Ebenfalls vereinfacht dargestellt ist ein Betätigungsglied 20, das z.B. auf einer elektromagnetischen oder manuellen Wirkungsweise basiert. Das Betätigungsglied 20 ist Teil der Funktionseinheit 9 und bedingt über zugehörige Schaltkontakte ein Durchschalten oder Auftrennen der entsprechenden Leiterbahn.

Neben der adapterfreien elektrischen und mechanischen Anordnung der Anschlussvorrichtung 6b an dem Installationsgerät 1a einerseits und dem Kontaktieren zwischen dem Installationsgerät 1a und der weiteren Anschlussvorrichtung 8a ohne den Einsatz eines individuell an das weitere Gegenkontaktmittel 7a angepassten Anschlussmittels andererseits, sind die Anschlussvorrichtungen 6b,8a auch an der jeweils anderen Anschlussseite 3a bzw. 3b anordbar. Selbstverständlich sind die Kontaktmittel 4a,4b wie auch das dritte Kontaktmittel 11, entsprechend der schematischen Darstellung, an gegenüberliegenden bzw. winkelversetzten Anschlussseiten in dem Installationsgerät 1a integrierbar bzw. daran anordbar.

Die Kontaktmittel 4a,4b weisen jeweils pro Phase oder Leiterbahn ein Kontaktelement 21 in Form eines so genannten Lyra-Kontakts auf. Mit Hilfe dieser gabelförmigen Kontaktelemente 21 ist es möglich einerseits Gegenkontaktelemente 22 der stromschienenförmigen Gegenkontaktmittel 7a der weiteren Anschlussvorrichtung 8a als auch die laschen- oder fahnenartigen Gegenkontaktelemente 22 des Gegenkontaktmittels 5b der austausch- und abnehmbaren Anschlussvorrichtung 6b zu kontaktieren. Die Gegenkontaktmittel 7a bieten durch ihre Schienenform den Vorteil, dass die Installationsgeräte 1a, 1b rasterlos, das heißt an beliebigen Stellen angeschlossen werden können. Zudem ist diese Art der Stromschienen einfach herzustellen und anwendungsgerecht ablängbar. Die Anschlussvorrichtung 6b weist ihrerseits für jede Phase ein Anschlussmittel 23 auf, das darstellungsgemäß für lediglich eine Phase als Schraubklemme ausgeführt ist. Weitere Ausführungsvarianten der Anschlussmittel 23 in Form von Federzug-, Schneid- oder Steckklemmen sowie Crimpverbindungen sind für jede einzelne Phase und/oder Leiter ebenfalls einsetzbar.

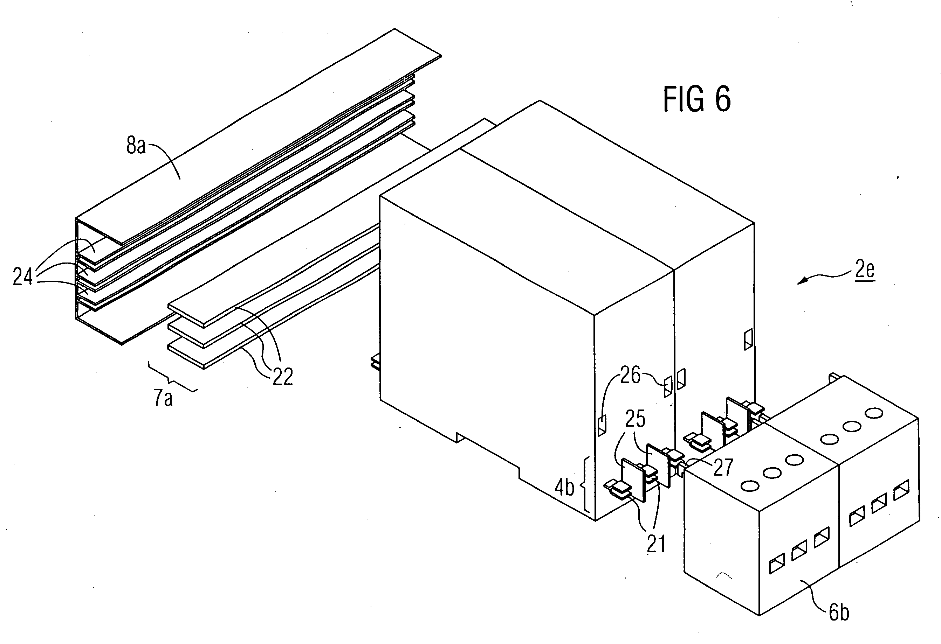

Die gemäß FIG 6 gezeigte Explosionsdarstellung der Installationsbaugruppe 2e verdeutlicht den Aufbau der weiteren Anschlussvorrichtung 8a und des weiteren Gegenkontaktmittels 7a. Die Gegenkontaktelemente 22 des Gegenkontaktmittels 7a sind dabei in vorgegebene Fassungen 24 einsteck- bzw. einschiebbar und von diesen isolierend umgeben und gegenseitig auf Abstand gehaltert. Zwischen jeweils zwei Kontaktelementen 21 des weiteren Kontaktmittels 4b sind isolierende Trennelemente 25 angebracht, welche den Isolationsabstand, insbesondere die Kriech- und Luftstrecken, gemäß vorgebbarer Anforderungen gewährleisten.

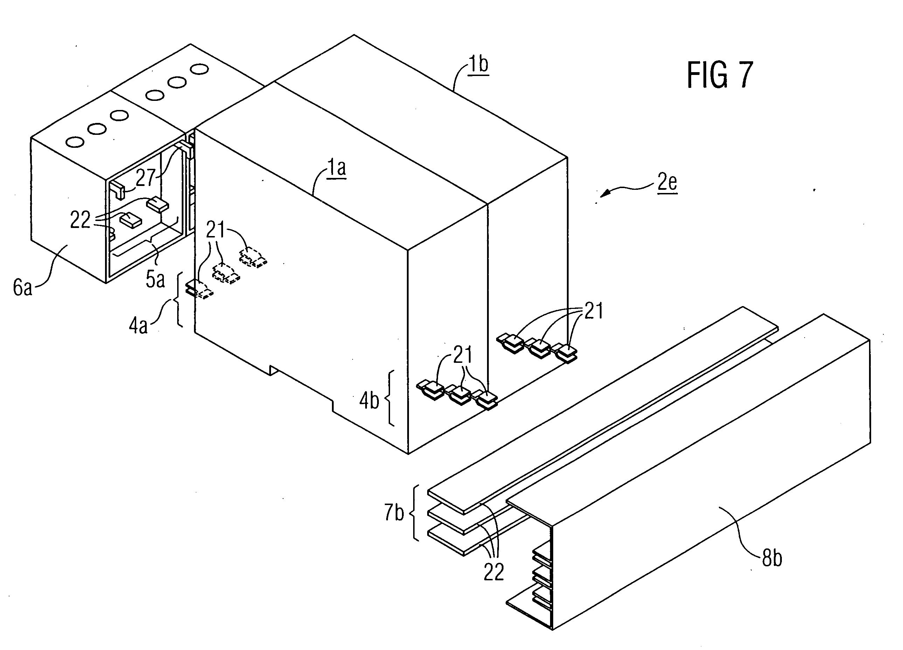

Auch in FIG 7 ist eine Explosionsdarstellung der Installationsbaugruppe 2e gezeigt. Zur Kontaktierung der durch die Stromschienen gebildeten weiteren Gegenkontaktmittel 7b bzw. Gegenkontaktelemente 22 sind die Kontaktelemente 21 der Installationsgeräte 1a, 1b stufenartig und zueinander versetzt angeordnet, so dass sich der Einsatz speziell ausgeformter Stromschienen, die ihrerseits einen Anschluss an den Kontaktelementen 21 ermöglichen würden, erübrigt. Die Gegenkontaktelemente 22 des Gegenkontaktmittels 5a sind auf einer Ebene innenseitig bzw. innenliegend in dem Gehäuse der Anschlussvorrichtung 6a angeordnet, wobei ein hohes Maß an Berührungssicherheit gegeben ist. Dementsprechend sind die Kontaktmittel 4a,4b außenseitig, dass heißt in einer einfach zugänglichen Weise, an dem Installationsgerät 1a angeordnet. Eine innenliegende Anordnung der jeweiligen Kontaktmittel 4a,4b bzw. eine außenliegende Anordnung der Gegenkontaktmittel 5a,7b ist je nach Anwendung ebenfalls vorsehbar.

Das Installationsgerät 1a gemäß FIG 6 und 7 ist mit einem schematisch dargestellten Halterungsmittel 26 versehen, das mit einem an der Anschlussvorrichtung 6a,6b angeordneten hakenartigen Gegenstück 27 korrespondiert, so dass sich eine form- und/oder kraftschlüssige Verbindung zwischen den Gehäusen des Installationsgeräts 1a und der jeweiligen Anschlussvorrichtung 6a,6b ergibt. Gleiches ist für die weitere Anschlussvorrichtung 8a,8b und auch für die dritte Anschlussvorrichtung 13a beispielsweise gemäß FIG 5 vorsehbar. Die Anschlussvorrichtungen 6a bzw. 6b gemäß FIG 5 bis 7 sind mit Vorteil in einer zu dem Installationsgerät 1a gleichen Baubreite kastenförmig ausgebildet, so dass eine gesamtheitliche Anordnung im Sinne des Reiheneinbauprinzips gegeben ist. Gleiches gilt selbstverständlich für die dritte Anschlussvorrichtung 13a.

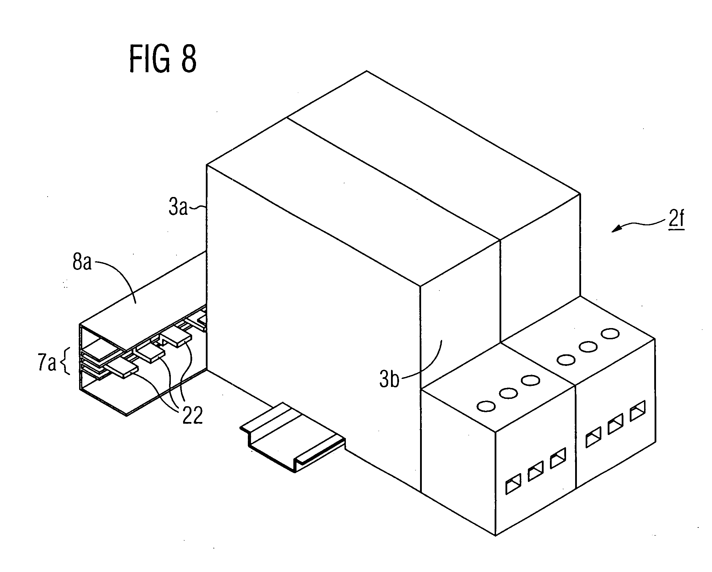

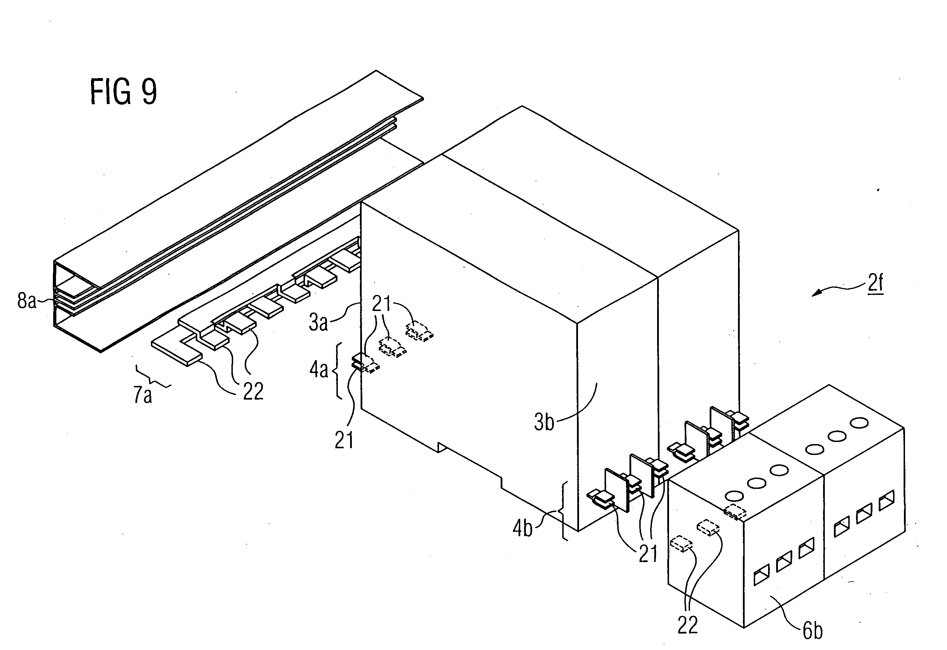

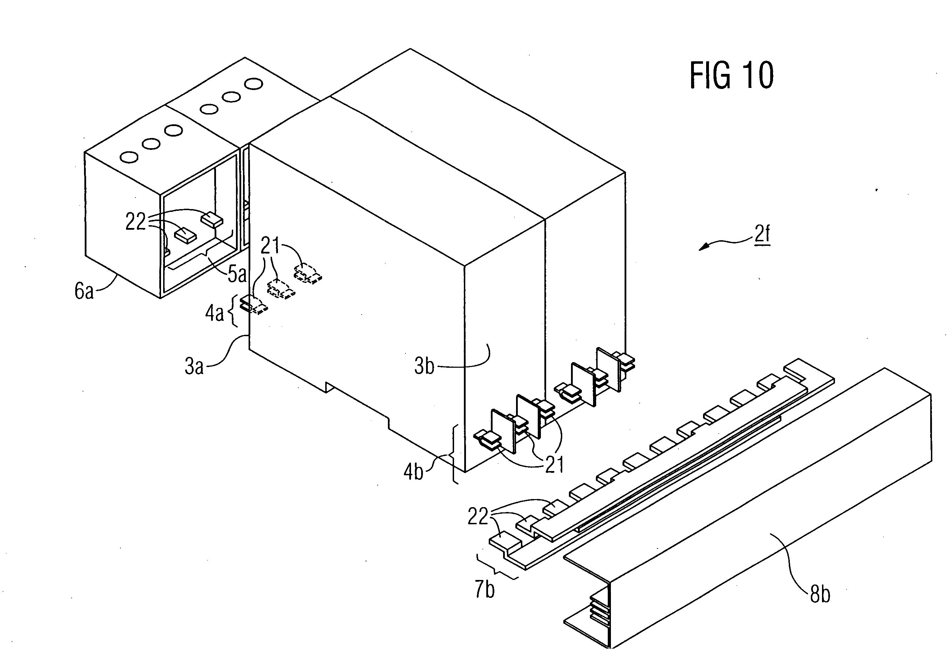

In den FIG 8 bis 10 ist die Installationsbaugruppe 2f in einer vorteilhaften Ausgestaltung gezeigt. Das weitere Gegenkontaktmittel 7a, 7b der weiteren Anschlussvorrichtung 8a bzw. 8b weist hierbei gekröpft ausgebildete Gegenkontaktelemente 22 auf, die dadurch auf einer Ebene angeordnet sind. Ebenso sind die Gegenkontaktelemente 22 der Anschlussvorrichtung 6a,6b auf einer Ebene angeordnet, so dass auf beiden Anschlussseiten 3a,3b die Kontaktelemente 21 auf einer Ebene angeordnet sind. Das Kontaktmittel 4a bzw. das weitere Kontaktmittel 4b weisen demnach einen identischen Aufbau auf.

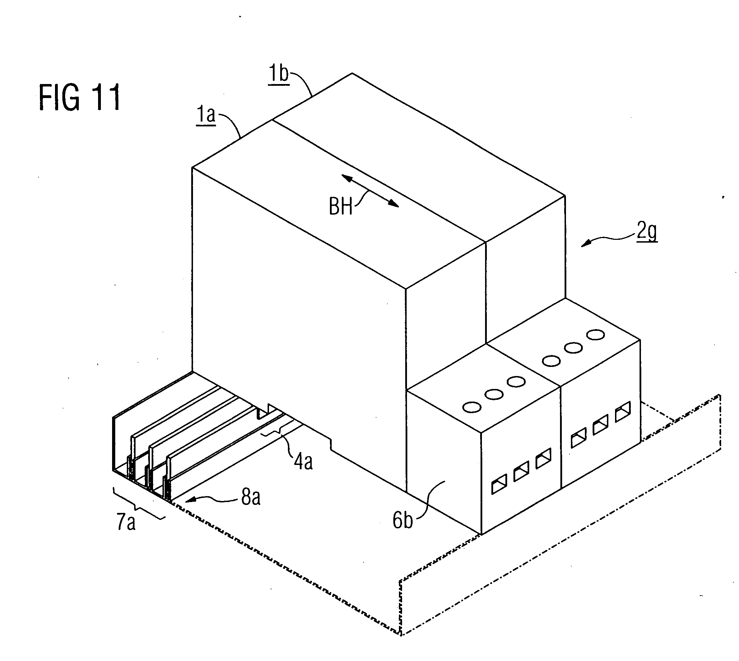

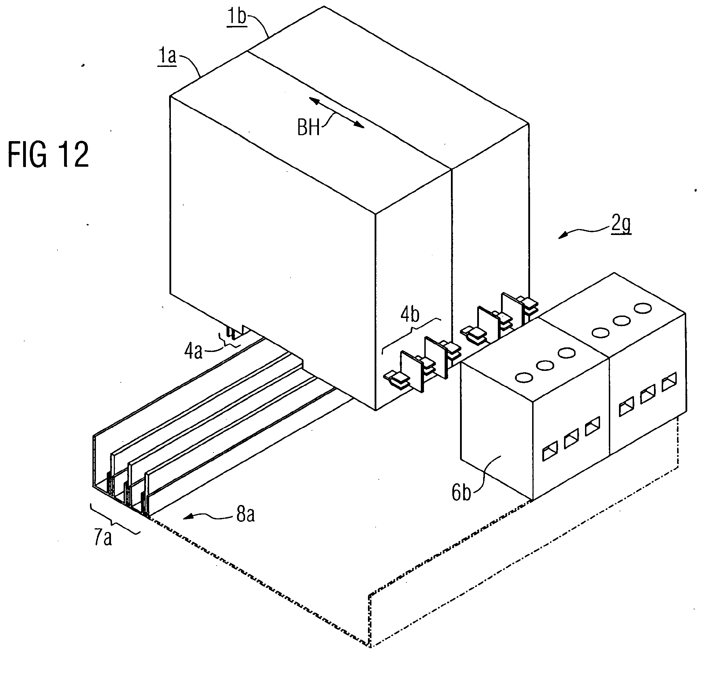

Gemäß den FIG 11 bis 13 sind die nebeneinander platzierten Installationsgeräte 1a,1b als Teil einer vorteilhaften Ausgestaltung der Installationsbaugruppe 2g jeweils derart ausgeführt, dass das Kontaktmittel 4a gegenüber dem weiteren Kontaktmittel 4b an einer winkelversetzten Anschlussseite 3c beispielsweise des Installationsgeräts 1a angeordnet ist.

Durch die Anordnung des Kontaktmittels 4a an einer Unterseite des Installationsgeräts 1a ist eine Kontaktierung der weiteren Gegenkontaktmittel 7a der weiteren Anschlussvorrichtung 8a gegeben. Dies hat eine Platzeinsparung in der Baugruppenhöhe BH bei montiertem Installationsgerät 1a zum Vorteil.

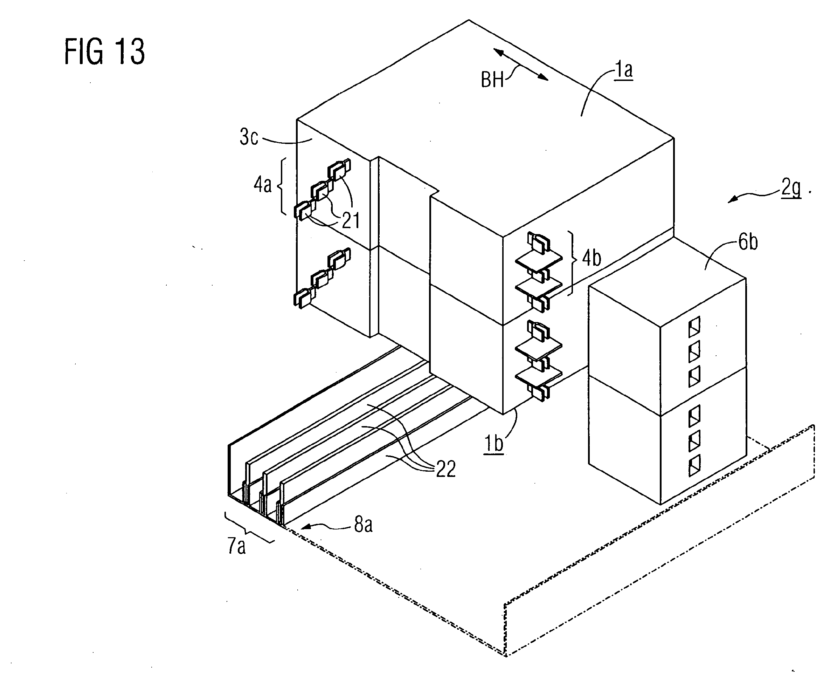

Die weitere Anschlussvorrichtung 8a ist hierbei als Montagevorrichtung, insbesondere Montageplattform, für die Anschlussvorrichtung 6b ausgeführt. Eine Aufnahme der dritten Anschlussvorrichtung 13a z.B. gemäß FIG 2 ist in gleicher Weise vorsehbar. Die wannenartige weitere Anschlussvorrichtung 8a dient zudem zur Halterung, Abstützung bzw. zur Auflage für die hierbei rasterlos installierbaren Installationsgeräte 1a,1b und ist beispielsweise in einem Schaltschrank vorteilhafterweise vormontierbar. In FIG 13 wird zudem deutlich, dass die Kontaktelemente 21 stufenartig, zueinander versetzt angeordnet sind, um die Kontaktierung der Gegenkontaktelemente 22 auf einfache Weise zu gewährleisten.

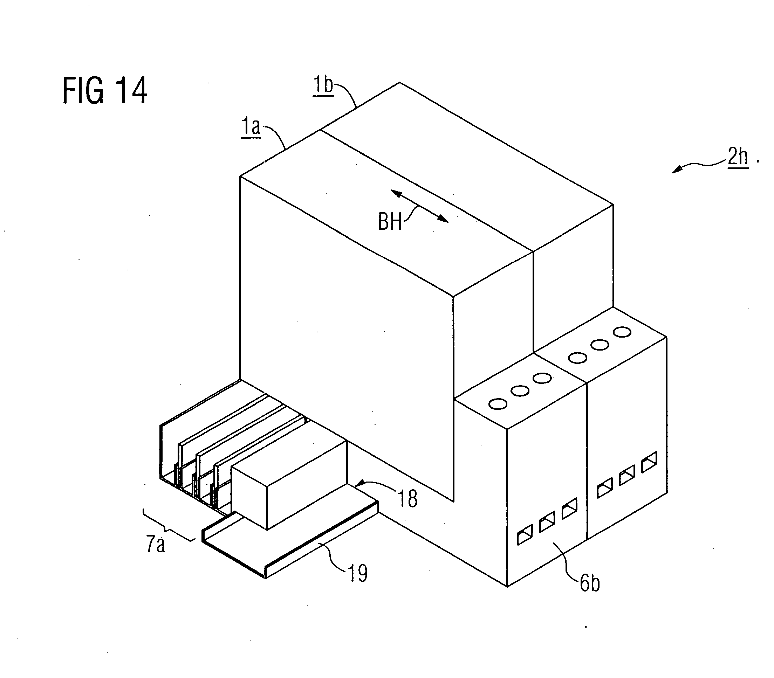

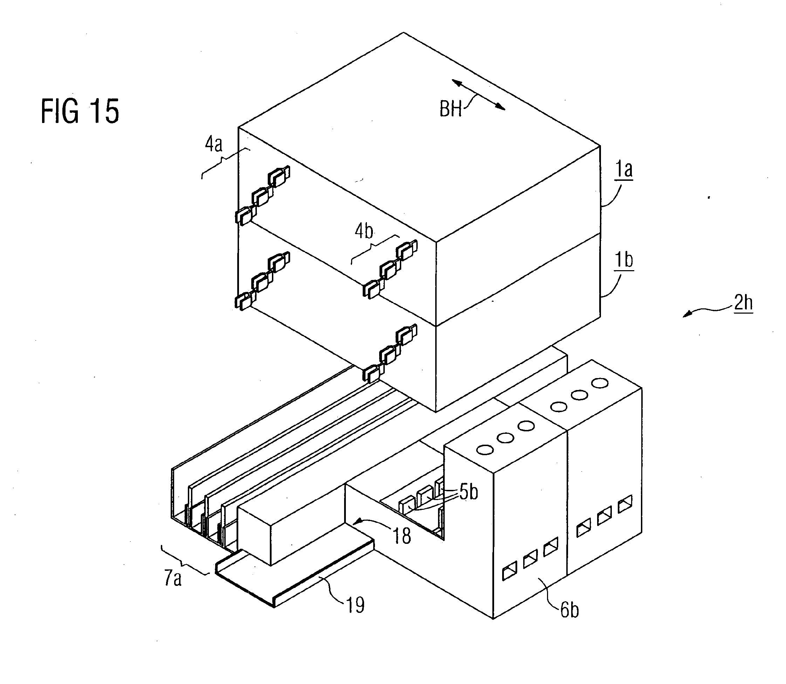

In der FIG 14 bzw. 15 ist weiterhin eine vorteilhafte Ausführungsvariante der Installationsbaugruppe 2h dargestellt, die einen besonders platzsparenden Aufbau ergibt. Hierbei sind die Kontaktmittel 4a,4b gemäß FIG 15 auf einer gemeinsamen Anschlussseite - hier eine Geräteunterseite - des Installationsgeräts 1a angeordnet. Sowohl das Gegenkontaktmittel 5b als auch das weitere Gegenkontaktmittel 7a sind dementsprechend vertikal zur Kontaktierung ausgerichtet. Dadurch ergibt sich insbesondere in Verbindung mit einer abgewinkelten Ausbildung der Anschlussvorrichtung 6b eine erhebliche Reduzierung der Baugruppenhöhe BH. Auch die dritte Anschlussvorrichtung 13a ist, um besagten Vorteil zu erzielen, abgewinkelt ausführbar. Mit Vorteil ist das Aufnahmemittel 18 für die Tragschiene 19 an der Anschlussvorrichtung 6b integriert, so dass selbst bei einer derart kompakten Bauweise der Installationsbaugruppe 2h eine handhabungsfreundliche Montage gegeben ist.

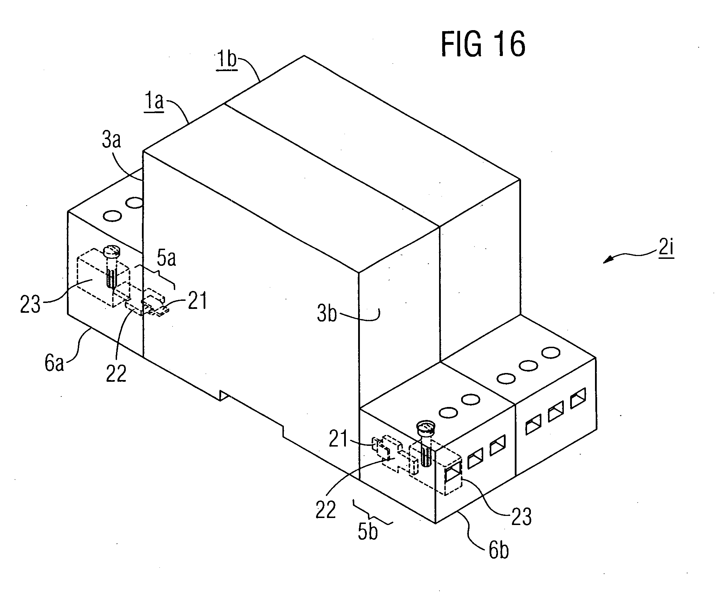

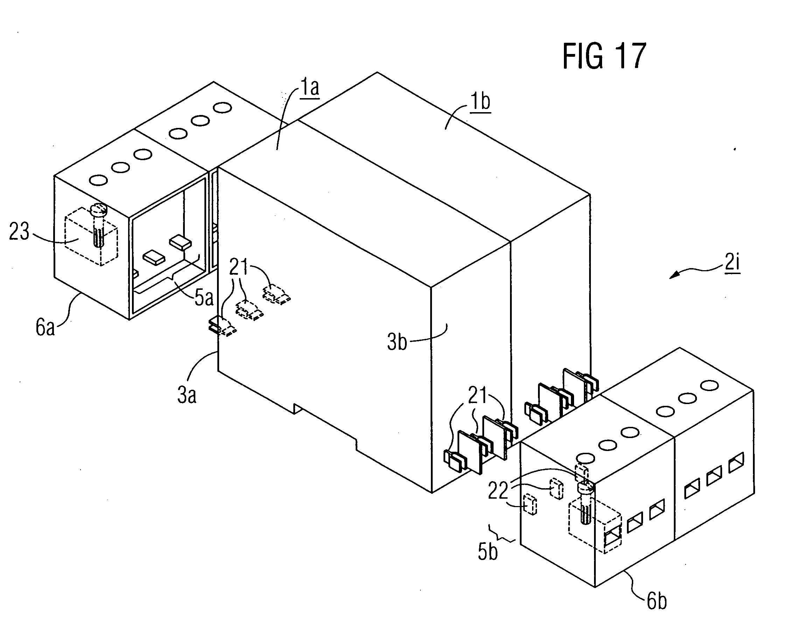

In den FIG 16 bis 19 sind Ausgestaltungen der Installationsbaugruppe 2i und 2j gezeigt, wobei an beiden Anschlussseiten 3a,3b des Installationsgeräts 1a je eine der Anschlussvorrichtungen 6a bzw. 6b in eine elektrisch leitende Verbindung bringbar ist. Die Anschlussvorrichtungen 6a,6b - hier mit jeweils einem als Schraubklemme ausgeführten Anschlussmittel 23 versehen - gemäß den FIG 16 und 17 unterscheiden sich dabei zum einen in deren Abmessungen und zum anderen in der Lage ihrer Gegenkontaktmittel 5a bzw. 5b. Diese sind um einen Winkel zueinander im Sinne eines Verpolungsschutzes versetzt angeordnet, so dass an der Anschlussseite 3a Kontaktmodule mit horizontal ausgerichteten Gegenkontaktelementen 22 und an der weiteren Anschlussseite 3b Kontaktmodule mit vertikal ausgerichteten Gegenkontaktelementen 22 an den jeweils lagegleichen Kontaktelementen 21 anschließbar sind. Die für den Lyra-Kontakt typische Gabelform findet sich bei den Kontaktelementen auf beiden Anschlussseiten des Installationsgeräts 1a wieder.

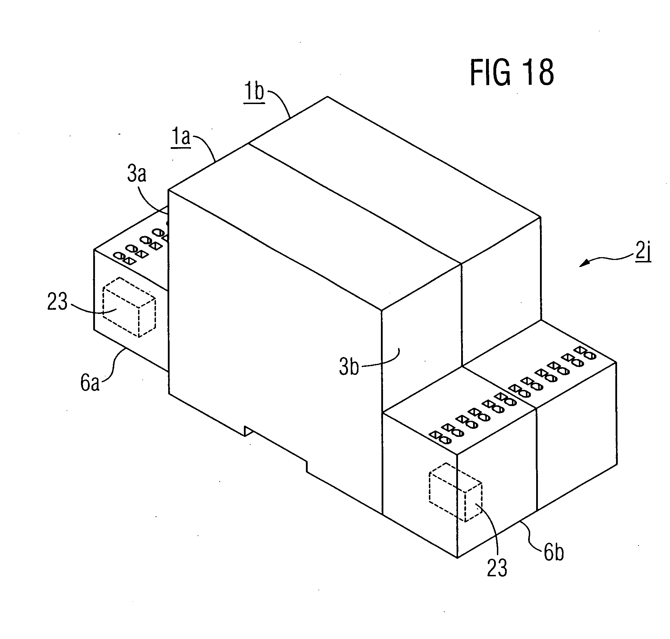

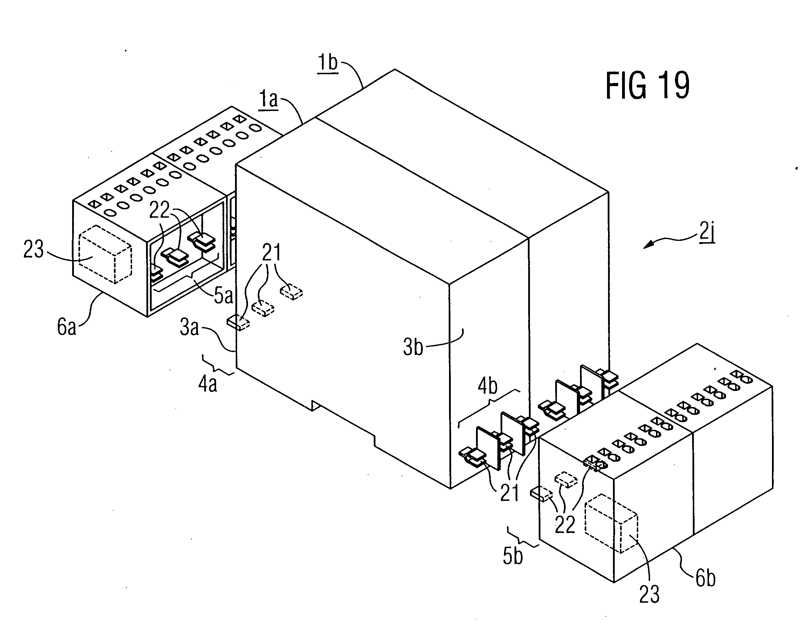

Die mit Anschlussmitteln 23 in Form von Federzugklemmen ausgestatteten Anschlussvorrichtungen 6a,6b gemäß den FIG 18 und 19 unterscheiden sich zum einen ebenfalls in deren Abmessungen und zum anderen in der Ausgestaltung ihrer Gegenkontaktmittel 5a bzw. 5b. Hierbei weist das Gegenkontaktmittel 5a die drei nebeneinander auf einer Ebene angeordneten Gegenkon. taktelemente 22, die als Lyra-Kontakt ausgebildet sind, auf. Dementsprechend sind die Kontaktelemente 21 der Kontaktmittel 4a auf der Anschlussseite 3a als Kontaktfahnen ausgebildet. Auf der gegenüberliegenden, weiteren Anschlussseite 3b sind die Kontaktelemente 21 des Kontaktmittels 4b beispielsweise entsprechend der FIG 6 ausgeführt, so dass auch gemäß dieser Ausführungsform ein Verpolungsschutz durch phasenuneinheitliche Kontakt- bzw. Gegenkontaktelemente 21 bzw. 22 gegeben ist.

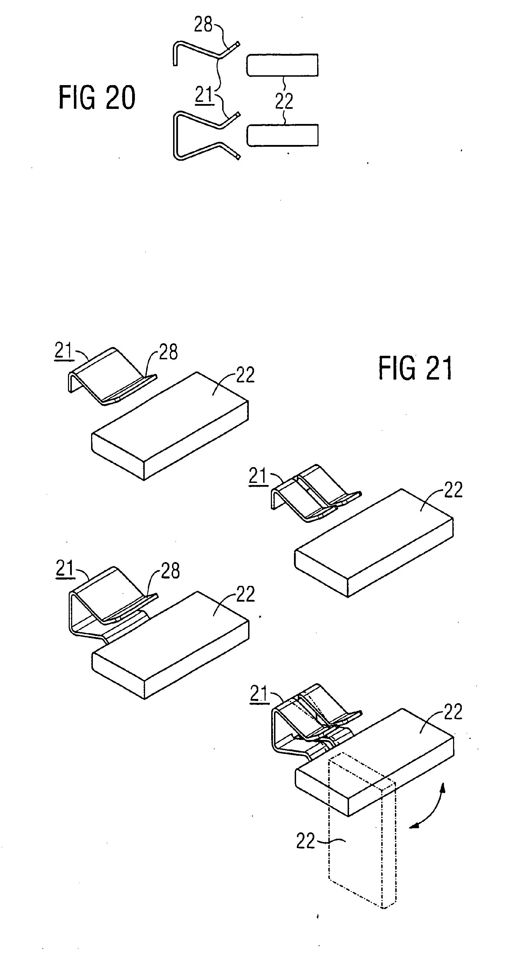

In den FIG 20 und 21 sind die Kontaktelemente 21 bzw. die Gegenkontaktelemente 22 schematisch bzw. perspektivisch dargestellt. Hierbei sind die Kontaktelemente 21 bzw. die Gegenkontaktelemente 22 in einer ersten Ausgestaltung annähernd S-förmig und gemäß einer zweiten Ausgestaltung gabelförmig ausgeführt. Beide Varianten sind derart geformt, dass über eine definierbare Vorspannung im Sinne eines Federkontaktes eine angemessene Kontaktkraft gegeben ist. Durch die sich mittels der eingebrachten Schlitze ergebende Unterteilung, z.B. der S-förmigen bzw. gabelförmigen Kontaktelemente 21 und der daraus resultierenden Vervielfältigung der Federkontakte je Kontaktelement 21, ist vorteilhafterweise die Stromtragfähigkeit bei gleichbleibender und verhältnismäßig geringer Kontaktkraft erhöht. Weiterhin ist eine kreuzgabelförmige oder auch kreuzschlitzförmige Ausbildung des Kontaktelements 21 bzw. des Gegenkontaktelements 22 gezeigt, so dass das jeweils andere Element wahlweise horizontal oder vertikal einführbar ist. Um einen ggf. vorhandenen Höhenversatz eines der Kontaktelemente 21 gegenüber einem der korrespondierenden Gegenkontaktelemente 22 auszugleichen und um eine Einführung im Sinne der Kontaktierung zu erleichtern ist je Kontakt- bzw. Gegenkontaktelement 21 bzw. 22 zumindest eine freiendseitige Anlaufschräge 28 gegeben.

Die zuvor erläuterte Erfindung kann wie folgt zusammengefasst werden:

Um ein Installationsgerät 1a, 1b und eine Installationsbaugruppe 2a-2j mit zumindest einem Installationsgerät 1a, 1b anzugeben, die einerseits für einen Einsatz verschiedener Anschlusstechnologien und andererseits für eine Einbindung in verschiedenen Verdrahtungssystemen geeignet sind, ist vorgesehen, dass das Installationsgerät 1a, 1b an einer Anschlussseite 3a-3c mit einem Kontaktmittel 4a,4b versehen ist, welches sowohl zu einem Gegenkontaktmittel 5a,5b einer an der Anschlussseite 3a-3c anordbaren Anschlussvorrichtung 6a,6b als auch zu einem weiteren Gegenkontaktmittel 7a,7b einer an der Anschlussseite 3a-3c anordbaren, jedoch zu der Anschlussvorrichtung 6a,6b unterschiedlichen, weiteren Anschlussvorrichtung 8a,8b kompatibel ist.

Durch die zu den Gegenkontaktmitteln 5a,5b bzw. 7a,7b kompatible Ausführung der Kontaktmittel 4a,4b sind an dem Installationsgerät 1a, 1b, das mit verschiedenen, jedoch standardisierten Funktionseinheiten 9 ausrüstbar ist, zum einen diverse als Kontaktmodule ausgebildete Anschlussvorrichtungen 6a,6b bzw. zum anderen diverse als Kontaktschienensysteme ausgebildete weitere Anschlussvorrichtungen 8a,8b ohne die Verwendung von integrierten, Schnittstellen bildenden Anschlusseinheiten oder Adaptern, also direkt an die jeweilige Funktionseinheit 9 des entsprechenden Installationsgeräts 1a, 1b kontaktierbar. Hierbei sind neben den Anschlussvorrichtungen 6a,6b bzw. 8a,8b auch die Kontaktschienensysteme für verschiedene Installationsgeräte 1a, 1b als Teil der Installationsbaugruppe 2a-2j standardisierbar, so dass insgesamt ein kostenreduzierter Aufbau gegeben ist. Die diversen Ausprägungen der Funktionseinheiten 9 - z.B. Ströme, Spannungen, Einstellbereiche und dgl. - bzw. der Anschlussvorrichtungen 6a,6b und 8a,8b - mehrere Anschlusstechnologien - beschränkt sich vorteilhafterweise auf die jeweilige Einheit bzw. Vorrichtung. Zudem ist eine gemeinsame Kontaktierung der Funktionseinheit 9 des Installationsgeräts 1a, 1b über die Schnittstelle des Steuer- bzw. Meldestromkreises mittels der Kontaktmodule bzw. des Kontaktschienensystems auswählbar, wobei ein damit einhergehender Signalweg entweder in das Kontaktmodul und/oder in das Kontaktschienensystem führt, so dass eine Kombination bei der Weiterführung der Signale ermöglicht ist.

## Patentansprüche

1. Installationsgerät (1a, 1b) welches an einer Anschlussseite (3a) mit einem Kontaktmittel (4a) versehen ist, das sowohl zu einem Gegenkontaktmittel (5a) einer an der Anschlussseite (3a) anordbaren Anschlussvorrichtung (6a) als auch zu einem weiteren, jedoch zu dem Gegenkontaktmittel (5a) unterschiedlichen, Gegenkontaktmittel (7a) einer an der Anschlussseite (3a) anordbaren weiteren Anschlussvorrichtung (8a) kompatibel ist.

2. Installationsgerät (1a, 1b nach Anspruch 1,
mit einem an einer weiteren Anschlussseite (3b) gegebenen weiteren Kontaktmittel (4b), welches zu dem Gegenkontaktmittel (5b) der an der weiteren Anschlussseite (3b) anordbaren Anschlussvorrichtung (6b) bzw. zu dem weiteren Gegenkontaktmittel (7b) der an der weiteren Anschlussseite (3b) anordbaren weiteren Anschlussvorrichtung (8b) kompatibel ist.

3. Installationsgerät (1a, 1b) nach Anspruch 2,
mit zumindest einem an einer Anschlussseite gegebenen dritten Kontaktmittel (11), welches zu einem dritten Gegenkontaktmittel (12a-12c) einer an der einen Anschlussseite (3a-3c) anordbaren dritten bzw. kombinierten Anschlussvorrichtung (13a,13b bzw. 8c) kompatibel ist.

4. Installationsgerät (1a, 1b) nach einem der Ansprüche 1 bis 3, mit einer Anordnung des Kontaktmittels (4a) und/oder des weiteren Kontaktmittels (4b) und/oder des dritten Kontaktmittels (11) an einer gemeinsamen Anschlussseite (3a-3c) .

5. Installationsgerät (la,lb) nach einem der Ansprüche 1 bis 3, mit einer Anordnung des Kontaktmittels (4a) und/oder des weiteren Kontaktmittels (4b) und/oder des dritten Kontaktmittels (11) an gegenüberliegenden bzw. winkelversetzten Anschlussseiten (3a-3c).

6. Installationsgerät (1a, 1b) nach einem der Ansprüche 1 bis 5, mit einer Ausbildung des Kontaktmittels (4a) und/oder des weiteren Kontaktmittels (4b) und/oder des dritten Kontaktmittels (11) mit jeweils zumindest einem Kontaktelement (21) je geräteseitig gegebener Leiterbahn.

7. Installationsgerät (1a, 1b) nach Anspruch 6,
mit einer einheitlichen bzw. baugleichen Ausbildung der Kontaktelemente (21) zumindest auf einer Anschlussseite (3a-3c) .

8. Installationsgerät (1a, 1b) nach Anspruch 6 und/oder 7, mit einer stufenartigen, zueinander versetzten Anordnung der Kontaktelemente (21) an zumindest einer Anschlussseite (3a-3c).

9. Installationsgerät (1a, 1b) nach Anspruch 6,7 und/oder 8, mit einer gabelförmigen bzw. kreuzgabelförmigen Ausbildung des jeweiligen Kontaktelements (21).

10. Installationsgerät (1a, 1b) nach Anspruch 6,7 und/oder 8, mit einer annähernd S-förmigen Ausbildung des jeweiligen Kontaktelements (21).

11. Installationsgerät (1a, 1b) nach Anspruch 9 oder 10,
mit zumindest einer freiendseitigen Anlaufschräge (28) je Kontaktelement (21).

12. Installationsgerät (1a, 1b) nach einem der Ansprüche 6 bis 11, mit jeweils einem Trennelement (25) zwischen zwei Kontaktelementen (21).

13. Installationsgerät (1a, 1b) nach einem der Ansprüche 1 bis 3, mit jeweils einem Halterungsmittel (26) für die Anschlussvorrichtung (6a,6b) und/oder für die weitere Anschlussvorrichtung (8a-8c) und/oder für die dritte Anschlussvorrichtung (13a,13b).

14. Installationsgerät (1a, 1b nach einem der Ansprüche 1 bis 3, mit einem Aufnahmemittel (18) für eine Tragschiene (19).

15. Installationsbaugruppe (2a-2j)
- mit zumindest einem Installationsgerät (1a, 1b) welches an einer Anschlussseite (3a bzw. 3c) mit einem Kontaktmittel (4a) und an einer weiteren Anschlussseite (3a bzw. 3c) mit einem weiteren Kontaktmittel (4b) versehen ist;
- mit einer an der einen Anschlussseite (3a bzw. 3c) anordbaren Anschlussvorrichtung (6a), die zu dem Kontaktmittel (4a) ein kompatibles Gegenkontaktmittel (5a) aufweist;
- mit einer an der weiteren Anschlussseite (3b bzw. 3c) anordbaren weiteren Anschlussvorrichtung (8a), die zu dem weiteren Kontaktmittel (4b) ein kompatibles weiteres, jedoch zu dem Gegenkontaktmittel (5a) unterschiedliches, Gegenkontaktmittel (7b) aufweist.

16. Installationsbaugruppe (2a-2j) nach Anspruch 15,
mit zumindest einem an einer Anschlussseite (3a-3c) gegebenen dritten Kontaktmittel (11), welches zu einem dritten Gegenkontaktmittel (12a-12c) einer an der einen Anschlussseite (3a-3c) anordbaren dritten bzw. kombinierten Anschlussvorrichtung (13a,13b bzw. 8c) kompatibel ist.

17. Installationsbaugruppe (2a-2j) nach Anspruch 15,
mit einer Ausbildung der Anschlussvorrichtung (6a,6b) als Kontaktmodul für ein daran anschließbares Lastelement und/oder einer Ausbildung der weiteren Anschlussvorrichtung (8a,8b) als Kontaktschienensystem für einen Hauptstromkreis.

18. Installationsbaugruppe (2a-2j) nach Anspruch 16,
mit einer Ausbildung der dritten bzw. kombinierten Anschlussvorrichtung (13a,13b bzw. 8c) als Zusatzmodul für einen Steuer- bzw. Meldestromkreis.

19. Installationsbaugruppe (2a-2j) nach einem der Ansprüche 15 bis 18,
mit jeweils einem Halterungsmittel (26) an dem Installationsgerät (1a,1b) für die Anschlussvorrichtung (6a,6b) und/oder für die weitere Anschlussvorrichtung (8a,8b) und/oder für die dritte Anschlussvorrichtung (13,13b).

20. Installationsbaugruppe (2a-2j) nach einem der Ansprüche 15,17 oder 19,
mit einer Ausbildung der weiteren Anschlussvorrichtung (8a,8b) als Montagevorrichtung, insbesondere Montageplattform, für die Anschlussvorrichtung (6a,6b) und/oder für die dritte bzw. kombinierte Anschlussvorrichtung (13,13b bzw. 8c).

21. Installationsbaugruppe (2a-2j) nach Anspruch 15,
mit einer zu dem Installationsgerät (1a, 1b) baubreitegleichen Ausbildung der Anschlussvorrichtung (6a,6b) und/oder der dritten Anschlussvorrichtung (13a,13b).

22. Installationsbaugruppe (2a-2j) nach Anspruch 15,
mit einer kastenförmigen bzw. abgewinkelten Ausbildung der Anschlussvorrichtung (6a,6b) und/oder der dritten Anschlussvorrichtung (13a,13b).

23. Installationsbaugruppe (2a-2j) nach Anspruch 1 und/oder 2, mit einer Anordnung des Kontaktmittels (4a) und/oder des weiteren Kontaktmittels (4b) und/oder des dritten Kontaktmittels (11) an einer gemeinsamen Anschlussseite (3a-3c) des Installationsgeräts (1a, 1b).

24. Installationsbaugruppe (2a-2j) nach Anspruch 1 und/oder 2, mit einer Anordnung des Kontaktmittels (4a) und/oder des weiteren Kontaktmittels (4b) und/oder des dritten Kontaktmittels (11) an gegenüberliegenden bzw. winkelversetzten Anschlussseiten (3a-3c) des Installationsgeräts (1a, 1b).

25. Installationsbaugruppe (2a-2j) nach Anspruch 1 und/oder 2, mit einer außenseitigen Anordnung der Kontaktmittel (4a,4b,11) an dem Installationsgerät (1a, 1b).

26. Installationsbaugruppe (2a-2j) nach Anspruch 1 und/oder 2, mit einer innenseitigen Anordnung der Gegenkontaktmittel (5a,5b bzw. 7a-7c bzw. 12a-12c) an der Anschlussvorrichtung (6a,6b) und/oder an der weiteren Anschlussvorrichtung (8a,8b) und/oder an der dritten bzw. kombinierten Anschlussvorrichtung (13ä,13b bzw. 8c).

27. Installationsbaugruppe (2a-2j) nach einem der Ansprüche 15,16 oder 23 bis 26, mit einer Ausbildung der Kontaktmittel (4a,4b,11) mit jeweils zumindest einem Kontaktelement (21) je geräteseitig gegebener Leiterbahn bzw. mit einer Ausbildung der Gegenkontaktmittel (5a,5b bzw. 7a-7c bzw. 12a-12c) mit jeweils zumindest einem Gegenkontaktmittel (22) je vorrichtungsseitig gegebener Leiterbahn.

28. Installationsbaugruppe (2a-2j) nach Anspruch 17 und/oder 27, mit an dem Kontaktschienensystem der weiteren Anschlussvorrichtung (8a,8b) angeordneten Gegenkontaktelementen (22).

29. Installationsbaugruppe (2a-2j) einem der Ansprüche 17, 27 und/oder 28, mit an dem Kontaktschienensystem der weiteren Anschlussvorrichtung (8a,8b) gekröpft ausgebildeten Gegenkontaktelementen (22).

30. Installationsbaugruppe (2a-2j) nach einem der Ansprüche 27 bis 29, mit einer einheitlichen bzw. zueinander baugleichen, insbesondere fahnenartigen, Ausbildung der Kontaktelemente (21) zumindest auf einer Anschlussseite (3a-3c) des Installationsgeräts (1a, 1b) bzw. der Gegenkontaktelemente (22) der jeweiligen Anschlussvorrichtung (6a,6b bzw. 8a-8c bzw. 13a,13b).

31. Installationsbaugruppe (2a-2j) nach einem der Ansprüche 27 bis 30, mit einer stufenartigen, zueinander versetzten Anordnung der Kontaktelemente (21) an zumindest einer Anschlussseite (3a-3c) des Installationsgeräts (1a,1b) bzw. der Gegenkontaktelemente (22) der jeweiligen Anschlussvorrichtung (6a,6b bzw. 8a-8c bzw. 13a,13b).

32. Installationsbaugruppe (2a-2j) nach einem der Ansprüche 27 bis 31, mit einer gabelförmigen oder kreuzgabelförmigen Ausbildung des jeweiligen Kontaktelements (21) bzw. des jeweiligen Gegenkontaktelements (22).

33. Installationsbaugruppe (2a-2j) nach einem der Ansprüche 27 bis 31, mit einer annähernd S-förmigen Ausbildung des jeweiligen Kontaktelements (21) bzw. des jeweiligen Gegenkontaktelements (22).

34. Installationsbaugruppe (2a-2j) nach Anspruch 32 und/oder 33, mit zumindest einer freiendseitigen Anlaufschräge (28) je Kontaktelement (21) bzw. je Gegenkontaktelement (22) .

35. Installationsbaugruppe (2a-2j) nach einem der Ansprüche 27 bis 34, mit jeweils einem Trennelement (25) zwischen zwei Kontaktelementen (21) bzw. zwischen zwei Gegenkontaktelementen (22).

36. Installationsbaugruppe (2a-2j) nach Anspruch 15 und/oder 16, mit zumindest an einer der Anschlussvorrichtungen (6a,6b bzw. 8a-8c bzw. 13a,13b) gegebenen Anschlussmitteln (23) für daran anschließbare Leiter, insbesondere Schraubklemmen und/oder Federzugklemmen.

37. Installationsbaugruppe (2a-2j) nach Anspruch 15 und/oder 16, mit einem Aufnahmemittel (18) für eine Tragschiene (19) an zumindest dem einen Installationsgerät (1a, 1b) bzw. an einer der Anschlussvorrichtungen (6a,6b bzw. 8a-8c bzw. 13a,13b).
